# EUROPEAN PATENT APPLICATION

(11) **EP 2 384 059 A1**
(43) Date of publication of application: **02.11.2011**
(21) Application number: 09839123.8
(22) Date of filing: 12.11.2009
(51) Int. Cl.: H04W 48/16, H04W 84/12

(54) **WIRELESS COMMUNICATION DEVICE AND CONNECTION DESTINATION SEARCH METHOD**

(30) Priority: 27.01.2009 JP 2009015326
(71) Applicant: Panasonic Corporation, Kadoma-shi Osaka 571-8501 (JP)
(72) Inventor: HATANO, Kouji c/o Panasonic Corporation IPROC, Osaka 540-6207 (JP); KAWAMURA, Akira c/o Panasonic Corporation IPROC, Osaka 540-6207 (JP); TAKEI, Yoshihiko c/o Panasonic Corporation IPROC, Osaka 540-6207 (JP)
(74) Representative: Grünecker, Kinkeldey, Stockmair & Schwanhäusser
(86) International application number: PCT/JP2009/006044
(87) International publication number: WO 2010/086931

(57) **Abstract**

A wireless communication device which can quickly switch connection to an optimal AP. In this device: a profile storage unit (102) stores profiles which include information necessary for establishing connections with access points and which are set with priorities between different access points; a profile update unit (103) outputs a profile update notice to the control unit (104) to indicate that a profile has been updated when a profile stored in the profile storage unit (102) is being updated; and the control unit (104) sends an instruction for another search for a connection destination access point in cases when there is a profile with a priority higher than that of the profile of the currently connected access point when a profile stored in the profile storage unit (102) has been updated.

## Description

### Technical Field

The present invention relates to a radio communication apparatus and an access destination search method.

### Background Art

With a conventional wireless LAN (Wireless Local Area Network: WLAN) system, a method in which a radio communication apparatus selects and connects with an AP that has a better communication state from among multiple access points (Access Point: AP) has been proposed.

For example, in a WLAN system, a radio communication apparatus holds a profile (or a connection profile) that includes information used to establish communication with an AP. In a profile that a radio communication apparatus holds, for example, BSSID (Basic Service Set Identifier) to identify each AP, ESSID (Extended Service Set Identifier) to identify a network (service area) formed with one or multiple APs, a verification system such as WPA (Wi-Fi Protocol Access) or WPA2, or information to show a state of connection ("connected" or "disconnected") between an AP and a radio communication apparatus, are included. A radio communication apparatus selects the profile of a destination AP, searches for an AP based on the selected profile, and establishes connection.

As an AP search method, there is a method giving priority to multiple profiles that a radio communication apparatus holds (see, for example, patent literature 1 and patent literature 2). A radio communication apparatus selects the profiles held in the apparatus in order from the profile of higher priority, searches for the APs corresponding to the selected profile, and establishes connection. A priority is determined based on, for example, the radio field intensity of an AP, the frequency that an AP is used, and the security robustness of the verification system provided in that AP.

As a method in a radio communication apparatus to connect with an AP, there are connection by automatic search and manual connection. With connection by automatic search, for example, there are cases where a radio communication apparatus searches for and connects with a destination AP when the apparatus is powered on, or where a radio communication apparatus searches for and connects with a destination AP when an application calls an API (Application Program Interface). With automatic search, there are cases where a radio communication apparatus re-searches for a destination AP when the currently connecting AP goes out of the service area, or where a radio communication apparatus re-searches for a destination AP at a regular timing. On the other hand, with manual connection, for example, a radio communication apparatus connects with an AP corresponding to the profile which a user selects by manual operation.

### Citation List

### Patent Literature

PTL1
   Japanese Patent Application Laid-Open No. 2008-160646 PTL2
   Japanese Translation of a PCT Application Laid-Open No. 2007-525894

### Summary of Invention

### Technical Problem

Here, a profile that a radio communication apparatus holds is updated automatically or by manual operation. However, once a connection with an AP is established, the connection with this AP is maintained until the radio communication apparatus moves out of the service area or an application is closed and the connection is cut. Thus, a radio communication apparatus does not search for a new AP, that is, a re-search for a destination AP, until the connection with a currently connecting AP is disconnected. Even when a radio communication apparatus regularly searches for a destination AP (automatic search), the current connection will be maintained until the next search.

Thus, even if a more appropriate profile than the currently connecting AP is registered by updating a profile, the radio communication apparatus cannot change connection. Thus, although an apparatus is able to switch its connection to the AP of the higher priority, the radio communication apparatus is unable to switch an access destination to an optimal AP until the next search.

It is therefore an object of the present invention to provide a radio communication apparatus and an access destination search method which can quickly switch connection to an optimal AP.

### Solution to Problem

The radio communication apparatus of the present invention employs a configuration to include: a holding section which holds profiles which include information required to establish connection with a communication device and in which priorities of individual communication devices are provided; and a control section which issues a command for a re-search for an access destination communication device when the profiles held in the holding section are updated and a profile of a higher priority than a profile of a currently connecting communication device is present.

The access destination search method of the present invention has: a holding step which holds profiles which include information required to establish connection with a communication device and in which priorities of individual communication devices are provided; and a controlling step which issues a command for a re-search for an access destination communication device when the profiles held in the holding section are updated and a profile of a higher priority than a profile of a currently connecting communication device is present.

### Advantageous Effects of Invention

According to the present invention, it is possible to quickly switch connection to an optimal AP.

### Brief Description of Drawings

FIG.1 is a conceptual diagram showing a configuration of a radio communication system according to each embodiment of the present invention;
FIG.2 is a block diagram showing a configuration of a radio communication apparatus according to embodiment 1 of the present invention;
FIG.3 shows a flow of a destination AP re-search process according to embodiment 1 of the present invention;
FIG.4 shows one example of a destination AP re-search process according to embodiment 1 of the present invention;
FIG.5 shows a flow of a destination AP re-search process according to embodiment 2 of the present invention;
FIG.6 shows one example of a destination AP re-search process according to embodiment 2 of the present invention;
FIG.7 is a block diagram showing a configuration of a radio communication apparatus according to embodiment 3 of the present invention; and
FIG.8 shows a flow of a destination AP re-search process according to embodiment 3 of the present invention.

### Description of Embodiments

Hereinafter, embodiments of the present invention will be explained in detail with reference to the accompanying drawings.

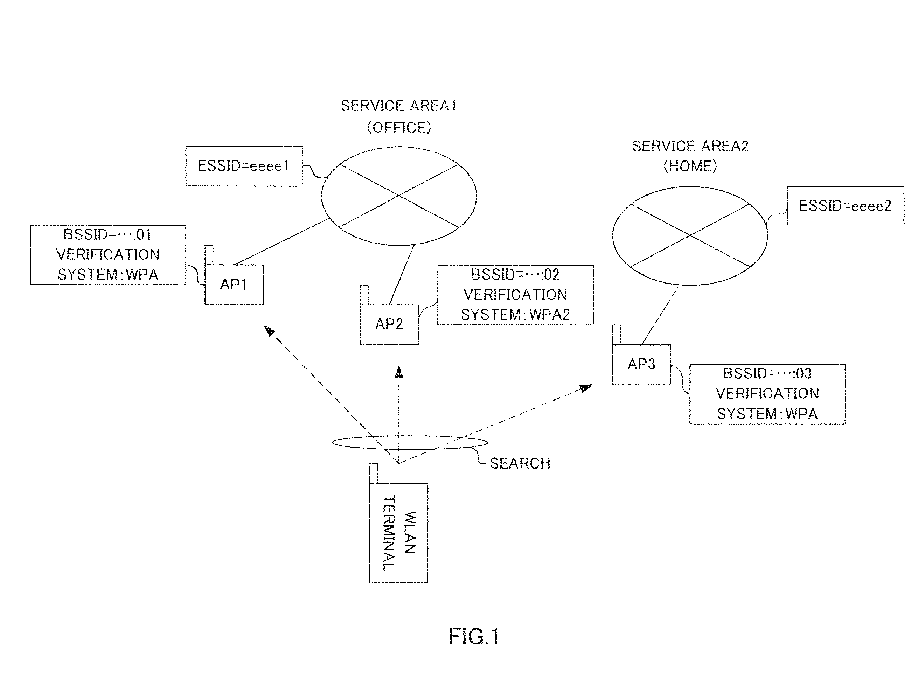

FIG.1 shows a configuration of a radio communication system according to each embodiment of the present invention. As shown in FIG.1, with a radio communication system in each embodiment below, there are service areal (ESSID=eeeel) formed with AP1 and AP2, and service area2 (ESSID=eeee2) formed with AP3. For example, service areal assumes an office, and service area2 assumes a home. As shown in FIG.1 : BSSID= "... : 01", verification system: WPA is provided in AP ; BSSID="...: 02", verification system: WPA is provided in AP2; and BSSID "...: 03", verification system: WPA is provided in AP3. In a WLAN terminal, among the priorities of profiles provided in AP1 - AP3, AP3 is the highest, AP2 is next to AP3, and AP1 is the lowest.

### (Embodiment 1)

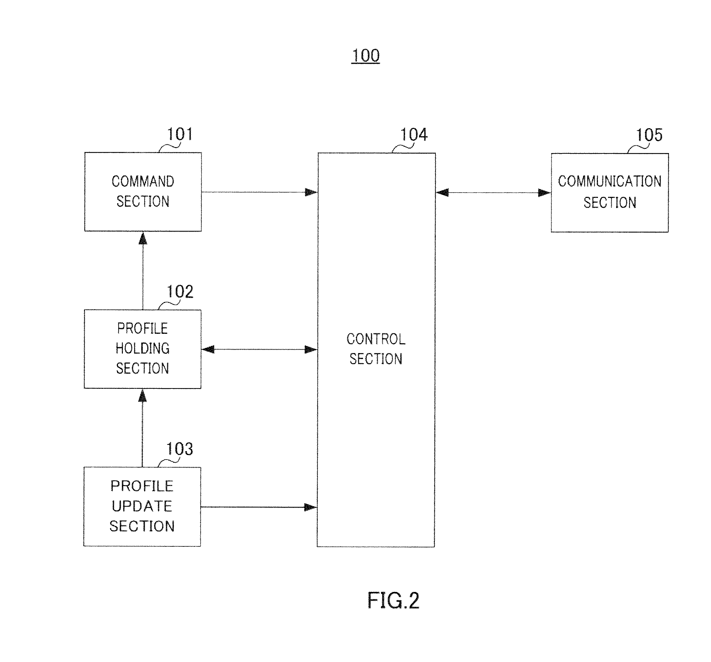

FIG.2 shows a configuration of radio communication apparatus 100 according to the present embodiment. In radio communication apparatus 100 shown in FIG.2, command section 101 commands control section 104 to search for and connect with an AP. For example, in case of manual connection, command section 101 selects, by manual operation, the profile of a destination AP from among the profiles held in profile holding section 102, and commands control section 104 to connect with the AP corresponding to the selected profile. In case of automatic search, command section 101 commands control section 104 to search for and connect with an AP, when an application starts, when the power of the apparatus is ON, when the apparatus moves out of the service area of a currently connecting AP, or on a regular searching timing.

Profile holding section 102 holds a profile that includes information that is required to establish connection with an AP. In this case, a profile includes a profile ID to identify each AP, ESSID, BSSID, a verification system, and a state of connection. Also, in a profile, the priorities among different APs (AP1 - AP3 in FIG.1) are provided. According to the commands from profile update section 103, profile holding section 102 updates the holding profile, by making changes, additions, and omissions of the profile. Also, profile holding section 102 updates the state of connection included in the holding profile, according to information that shows the connecting state with an AP, which is included in communication information input from control section 104.

Profile update section 103 controls the update of the profiles held in profile holding section 102, by commanding to make changes, additions, and omissions of the profile. For example, profile update section 103 may issue a command to make changes, additions, and omissions of the profile by manual operation. Profile update section 103 may download a profile from a communication system such as a WLAN system or a 3G network system. Profile update section 103 may issue a command to switch the status of a profile between valid/invalid, based on environmental conditions such as the place where the apparatus is located or the time. When updating the profiles held in profile holding section 102 profile update section 103 outputs a profile update notice showing that a profile is going to be updated, to control section 104.

Control section 104 controls a connection with an AP according to the commands from command section 101. Specifically, control section 104 selects a profile corresponding to an AP with which the apparatus is going to establish connection, from among the profiles held in profile holding section 102. For example, in case of automatic search, control section 104 selects a profile in order from a profile having higher priority, among the profiles held in profile holding section 102. In case of manual connection, control section 104 selects the profile designated by command section 101. Based on the selected profile, control section 104 commands communication section 105 to search for and connect with an AP. Control section 104 outputs to profile holding section 102 the communication information, which is input from communication section 105 and which includes the information showing a result of the search of AP or the state of connection with AP (connected or disconnected).

When a profile update notice is input from profile update section 103, control section 104 references to the profiles held in profile holding section 102, and decides whether or not the profile of a higher priority than a profile of the currently connecting AP is present. In the presence of the profile of a higher priority than a profile of the currently connecting AP, control section 104 designates to re-search for a destination AP. On the other hand, in the absence of the profile of a higher priority than a profile of the currently connecting AP, control section 104 maintains a connection with the currently connecting AP.

Communication section 105 searches for and connects with an AP based on a WLAN protocol, according to the command from control section 104. Communication section 105 outputs to control section 104 the communication information, according to the result of search and connection with an AP.

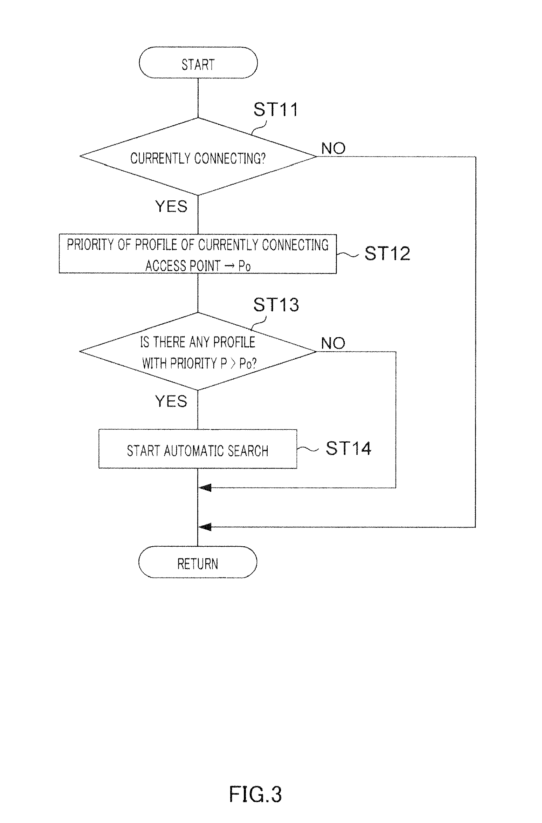

Next, a destination AP re-search process in control section 104 of radio communication apparatus 100 according to the present embodiment will be described. FIG.3 shows a flow of a destination AP re-search process, in control section 104 when a profile update notice is input from profile update section 103.

In step (hereinafter "ST") 11 in FIG.3, control section 104 references to the state of connection included in the profiles held in profile holding section 102, and decides whether or not a currently connecting AP is present.

In the presence of a currently connecting AP (ST11 :"YES"), in ST12, control section 104 achieves the priority Po that is provided in the currently connecting AP. In ST13, control section 104 decides whether or not there is a profile in which a higher priority P than the priority Po achieved in ST12 is provided, among the profiles held in holding section 102.

In the presence of a profile in which a higher priority P than the priority Po is provided (ST13:"YES"), in ST14, control section 104 starts for automatic search for an access destination AP by commanding a re-search for an access destination AP.

On the other hand, in the absence of a currently connecting AP (ST11:"NO"), or in the absence of the profile in which a higher priority P than the priority Ro is provided (ST13:"NO"), control section 104 does not do anything. Thus, the connection with a currently connecting AP is maintained.

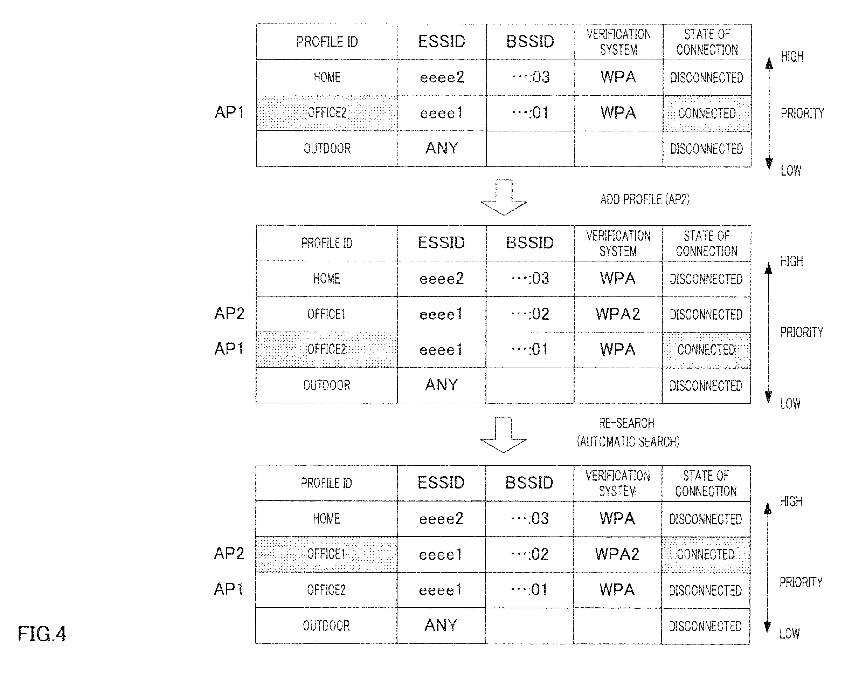

Next, a specific example of a destination AP re-search process in radio communication apparatus 100 will be described. In this case, in the radio communication system shown in FIG.1, radio communication apparatus 100 (WLAN terminal) is located in service areal (office) and is located out of the service area of AP3 forming service area2 (home). As shown in the upper part of FIG.4, profile holding section 102 of radio communication apparatus 100 (WLAN terminal) holds the profiles of AP1 (profile ID: "office2") shown in FIG.1 and AP3 (profile ID: home) shown in FIG.1. In FIG.4, the profile that includes profile ID: "outdoor" and ESSID="ANY" shows that any APs other than AP1 - AP3 shown in FIG.1 are going to be connected once searched. Thus, when selecting the profile of profile ID: "outdoor", radio communication apparatus 100 connects with whichever ESSID the searched AP has.

Here, command section 101 commands control section 104 to automatically search for an AP. Thus, control section 104 searches for an AP in order from an AP corresponding to the profile having higher priority. As a result of the search, control section 104 establishes connection with AP1 (profile ID: "office2"), because AP3 (profile ID: home) is out of the service area. By this means, in the profile of AP1 (profile ID: "office2"), the connecting state becomes "connected" as shown in the upper part in FIG.4.

Here, profile update section 103 performs updating to add a profile of AP2 shown in FIG.1. Specifically, as shown in the middle part of FIG.4, the profile of AP2 (profile ID: "office") is added in profile holding section 102. In this case, profile update section 103 outputs a profile update notice to show the profiles held in profile holding section 102.

When a profile update notice is input from profile update section 103, control section 104 references to the profile (the middle part in FIG.4) held in profile holding section 102 and decides whether or not to re-search for a destination AP. In this case, as shown in the middle part of FIG.4, the profile (profile ID: "office1") with a higher priority than the profile (profile ID: "office2") of currently connecting AP1 is present. Thus, control section 104 issues a command for a re-search for a destination AP, to search for and connect with AP2 corresponding to a profile (profile ID: "office1") of a higher priority than a profile of the currently connecting AP.

Once a connection is established with AP2, as shown in the lower part in FIG.4, the connecting state of AP1 (profile ID: "office2") becomes "disconnected" and the connecting state of AP2 (profile ID: "office1") becomes "connected."

Therefore, where profiles held in profile holding section 102 are updated, in the presence of a profile of a higher priority than the currently connecting AP, radio communication apparatus 100 re-searches for a destination AP. By this means, when the profiles held in profile holding section 102 are updated so that a profile of a higher priority than the currently connecting AP is present, radio communication apparatus 100 is able to switch the connection to the AP corresponding to the profile of a higher priority at the same time the profiles are updated, that is, at the same time the AP is available for connection. Thus, radio communication apparatus 100 can re-search for a destination AP at the timing the profile of a higher priority is updated, in addition to the timing of usual search (for example, at power-on, at the timing of regular search). Thus, radio communication apparatus 100 can always establish connection with an optimal AP by automatic search.

Therefore, according to the present embodiment, a radio communication apparatus can quickly switch connection to an optimal AP, when the profiles which the apparatus holds are updated and when a profile of a higher priority than the currently connecting AP is present.

### (Embodiment 2)

With the present embodiment, a radio communication apparatus controls to re-search for a destination AP, depending on by which one of automatic search and manual connection the connection with a current AP has been established.

The details will be described below. The profiles held in profile holding section 102 of radio communication apparatus 100 (FIG.2) according to the present embodiment include connecting factor information showing by which one of automatic search and manual connection the connection with currently connecting AP has been established, in addition to the information included in the profile (FIG.4) in embodiment 1.

When a profile update notice is input from profile update section 103, as embodiment 1, control section 104 references to the profiles held in profile holding section 102. In the presence of a profile of a higher priority than the currently connecting AP in the referenced profile, control section 104 issues a command for a destination AP re-search. However, control section 104 issues a command for a destination AP re-search only when the information about cause of connection, included in the profile of the currently connecting AP shows automatic search. In other words, even in the presence of a profile having a higher priority than the profile of the currently connecting AP, control section 104 does not command a re-search for a destination AP if information about cause of connection shows manual search.

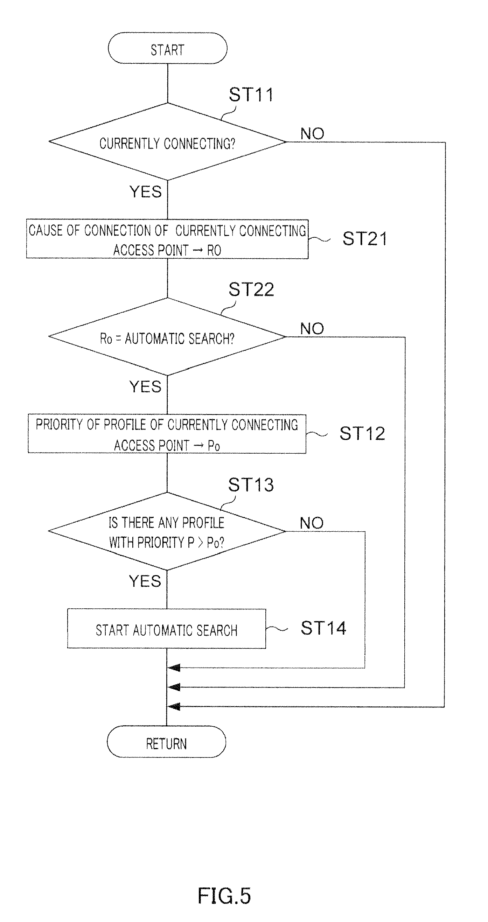

Next, a destination AP re-search process in control section 104 of radio communication apparatus 100 according to the present embodiment will be described in detail. FIG.5 shows a flow of a destination AP re-search process, in control section 104 when a profile update notice is input from profile update section 103. Parts in FIG.5 that are the same as in FIG.3 will be assigned the same reference numerals as in FIG.3 and overlapping descriptions will be omitted.

In FIG.5, in the presence of a currently connecting AP (ST11:"YES"), in ST21, control section 104 achieves information about cause of connection, Ro, included in the profile of the currently connecting AP. In ST22, control section 104 decides whether or not information about cause of connection Ro achieved in ST21 shows a connection by automatic search.

When information about cause of connection Ro is connection by automatic search (ST22:"YES''), control section 104 moves on to ST12.

On the other hand, control section 104 does not do anything, when information about cause of connection Ro does not show a connection by automatic search (ST22:"NO") -- that is, if information about cause of connection shows a connection by manual connection.

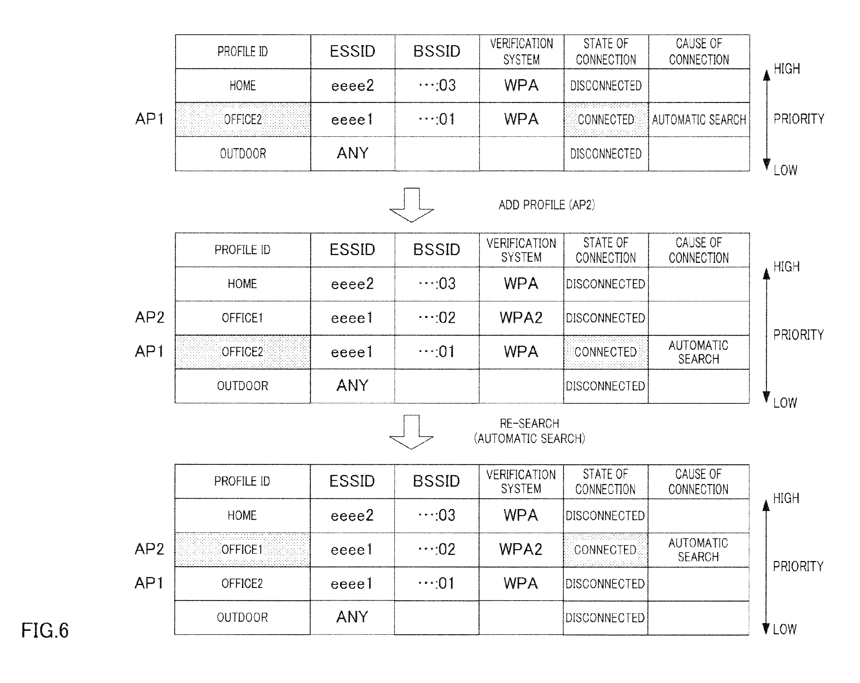

Next, a specific example of a destination AP re-search process in radio communication apparatus 100 will be described. As in embodiment 1, in the radio communication system shown in FIG.1, radio communication apparatus 100 (WLAN terminal) is located in service areal (office) and is located out of the service area of AP3 that forms service area2 (home). As shown in FIG.6, profile holding section 102 of radio communication apparatus 100 (WLAN terminal) holds the profiles of AP1 (profile ID: "office2") and AP3 (profile ID: home) shown in the upper part in FIG.6. Command section 101 commands control section 104 to carry out automatic search for an AP. Thus, control section 104 searches for an AP in order from an AP corresponding to the profile having higher priority from among the profiles shown in the upper part in FIG.6. As a result of the search, AP3 (profile ID: home) is out of the service area, so that control section 104 establishes connection with AP1 (profile ID: "office2"). By this means, in the profile (profile ID: "office2") of AP1, as shown in the upper part in FIG.6, the connecting state becomes "connected", and the cause of connection becomes "automatic search."

Here, as embodiment 1, profile update section 103 performs updating to add the profile (profile ID: "office1") of AP2 shown in FIG.1. In this case, profile update section 103 outputs a profile update notice to show the profiles held in profile holding section 102.

When a profile update notice is input from profile update section 103, control section 104 references to the profile (the middle part in FIG.6) held in profile holding section 102, and decides whether or not to re-search for a destination AP. Specifically, control section 104 decides that it is possible to re-search for a destination AP since the cause of connection that is included in the profile of currently connecting AP1 shows "automatic search." In this case, as shown in the middle part of FIG.6, the profile (profile ID: "office1") with a higher priority than the profile (profile ID: "office2") of currently connecting AP1 1 is present. Thus, control section 104 issues a command for a destination AP re-search, that is, a command to search for and connect with AP2 corresponding to a profile (profile ID: "office1") to a higher priority than the profile of the currently connecting AP.

Once a connection is established with AP2, as shown in the lower part in FIG.6, the connecting state of AP1 (profile ID: "office2") becomes "disconnected" and the cause of connection is reset. On the other hand, as shown in the lower part in FIG.6, the connecting state of AP2 (profile ID: "office") becomes "connected", and the cause of connection becomes "automatic search."

Therefore, radio communication apparatus 100 re-searches for a destination AP, only while the connection with current AP is established by automatic search. Thus, while the connection with the current AP is established by manual connection, radio communication apparatus 100 does not re-search for a destination AP, even if better profiles are updated. By this means, the connection with an AP which connection is established by manual connection will not be switched by automatic search.

Therefore, in the case of automatic search, the present embodiment can achieve the same effect as embodiment 1, and in the case of manual connection, it is possible to prevent a manually-connected AP based on the user's choice from being automatically changed against the user's will.

### (Embodiment 3)

A case will be described here with the present embodiment where a radio communication apparatus controls a re-search for a destination AP based on search permission information showing whether or not automatic search of a destination AP is permitted.

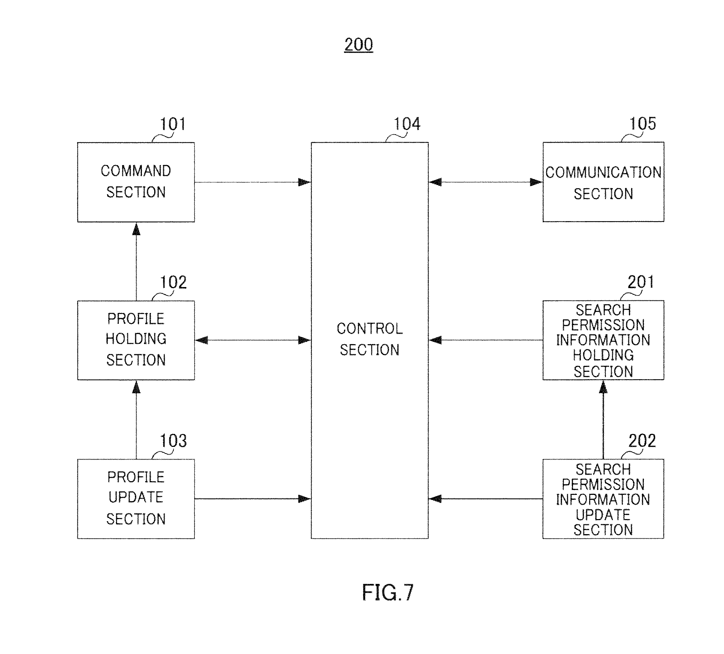

FIG.7 shows a configuration of radio communication apparatus 200 according to the present embodiment. Parts in FIG.7 that are the same as in FIG.2 will be assigned the same reference numerals as in FIG.2 and overlapping descriptions will be omitted.

In radio communication apparatus 200 shown in FIG.7, search permission information holding section 201 holds the search permission information to show whether or not (that is, permit or prohibit) the establishment of the connection to search an AP by automatic search is permitted. Search permission information holding section 201 updates the holding search permission information it holds, according to commands from search permission information update section 202.

Search permission information update section 202 controls the update of search permission information held in search permission information holding section 201 holds. When the search permission information held in search permission information holding section 201 holds is updated, search permission information update section 202 outputs to control section 104 a search permission information update notice showing that search permission information is going to be updated.

In the case of automatic search, control section 104 controls automatic search for a destination AP, according to the search permission information (permission or prohibition) input from search permission information holding section 201. Thus, control section 104 commands a search for a destination AP only when the search permission information shows a permission for automatic search.

When the search permission information update notice is input from search permission information update section 202, control section 104 references to the profiles held in profile holding section 102. With the referenced profile, while a connection of the currently connecting AP is established by automatic search, and while a profile of a higher priority than the currently connecting AP is present, control section 104 issues a command for a destination AP re-search. Thus, control section 104 decides whether or not to re-search for a destination AP when a profile is updated as in the case with embodiment 1 and additionally when search permission information is updated.

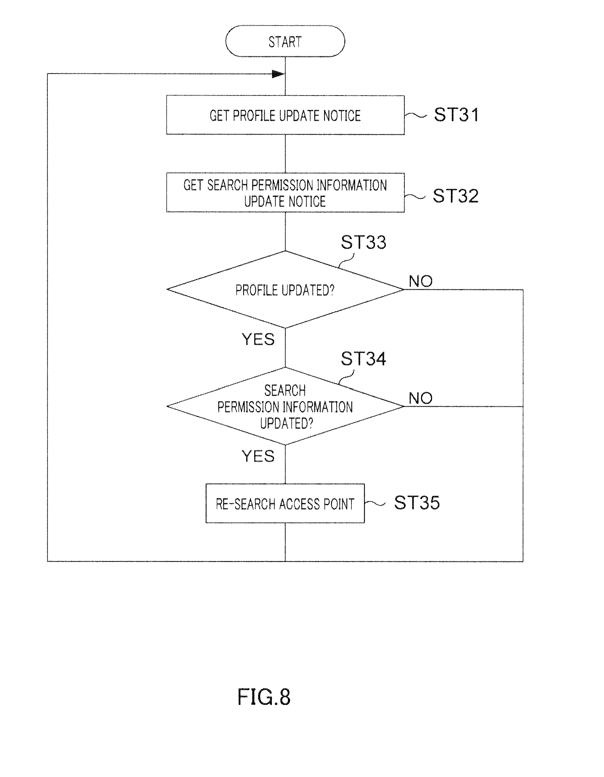

Next, a flow of a destination AP re-search process in control section 104 of radio communication apparatus 200 will be described. In a destination AP re-search process of ST35 shown in FIG.8, the same process as embodiment 2 (FIG.5) is carried out.

In ST31, for example, by carrying out a polling process, control section 104 achieves a profile update notice from profile update section 103.

In ST32, by carrying out a polling process as in ST31, control section 104 achieves a search permission information update notice from search permission information update section 202.

When by referencing to a profile update notice achieved at ST31, the profiles held in profile holding section 102 are decided to be updated (ST33:"YES"), and also by referencing to a search permission information update notice achieved at ST32, the search permission information held in search permission information holding section 201 holds is decided to be updated (ST34:"YES"), in ST35, control section 104 issues a command for a destination AP re-search as embodiment 2 (FIG.5). On the other hand, when the profiles held in profile holding section 102 are decided not to be updated (ST33:"NO"), or when the search permission information held in search permission information holding section 201 holds is decided not to be updated (ST34:"NO"), control section 104 does not do anything and returns to ST31. Thus, the connection with the currently connecting AP is maintained.

By this means, in the presence of a profile having a higher priority than the profile of the currently connecting AP, radio communication apparatus 200 performs once it is permitted to establish connection by automatic search. Thus, radio communication apparatus 200 can re-search for a destination AP at the timing when an automatic search is possible, without waiting until the above mentioned timing of usual search (for example, at power-on, at the timing of regular search).

Therefore, according to the present embodiment, where the profiles which the apparatus holds are updated, or, where an establishment to connect by automatic search is permitted, in the presence of a profile of a higher priority than the currently connecting AP, a radio communication apparatus can quickly switch its connection to an optimal AP.

Embodiments of the present invention have been explained above.

The above embodiment describes a case where a WLAN terminal connects with an AP as one example. However, the present invention is by no means limited to a case where a WLAN terminal connects with an AP, and it is equally possible to implement the present invention with non-WLAN radio communication apparatuses, in a case where, for example, a terminal that is capable of Bluetooth (registered trademark) communication connects with surrounding communication devices.

The disclosure of Japanese Patent Application No. 2009-015326, filed on January 27, 2009, including the specification, drawings and abstract, is incorporated herein by reference in its entirety.

### Industrial Applicability

The present invention is applicable to, for example, a mobile communication system.

## Claims

1. A radio communication apparatus comprising:
a holding section which holds profiles which include information required to establish connection with a communication device and in which priorities of individual communication devices are provided; and
a control section which issues a command for a re-search for an access destination communication device when the profiles held in the holding section are updated and a profile of a higher priority than a profile of a currently connecting communication device is present.

2. The radio communication apparatus according to claim 1, wherein:
the profiles further include information about cause of connection showing by which one of connection by automatic search and manual connection the connection has been established; and
the control section issues the command for the re-search only when the information about cause of connection included in the profile of the connecting communication device shows connection by automatic search.

3. The radio communication apparatus according to claim 1, wherein the control section further issues the command for the re-search when permission information showing whether or not to permit an establishment of connection by automatic search is updated and the permission information shows permission for the automatic search.

4. An access destination search method comprising:
a holding step which holds profiles which include information required to establish connection with a communication device and in which priorities of individual communication devices are provided; and
a controlling step which issues a command for a re-search for an access destination communication device when the profiles held in the holding section are updated and a profile of a higher priority than a profile of a currently connecting communication device is present.

## Amended claims

### Amended claims under Art. 19.1 PCT

**1.** Amended) A radio communication apparatus comprising:
a holding section which holds profiles which include information required to establish connection with a communication device and in which priorities of individual communication devices are provided;
a control section which, when the profiles are updated so that a profile of a higher priority than a profile of a currently connecting communication device is registered in the profiles held in the holding section, issues a command for a re-search for an access destination communication device if a connection with the currently connecting communication device has been established by connection by automatic search, or does not issue the command for the re-search if the connection with the currently connecting communication device has been established by manual connection; and
a communication section which, when the re-search for the access destination communication device is carried out, switches a current connection to a connection with an access destination communication device that is determined based on a result of the re-search.

**2.** Amended) The radio communication apparatus according to claim 1, wherein:
the profile further includes information about cause of connection showing by which one of the automatic search and the manual connection the connection has been established; and
the control section decides by which one of the connection by the automatic search and the manual connection the connection with the currently connecting communication device has been established using the information about cause of connection included in the profile of the connecting communication device.

**3.** Amended) The radio communication apparatus according to claim 1, wherein, when permission information which shows whether or not to permit an establishment to connect by the automatic search is updated, the control section further issues a command for the re-search if the permission information shows the permission for the automatic search and the connection with the currently connecting communication device has been established by the automatic search.

**4.** Amended) An access destination search method comprising:
a holding step which holds profiles which include information required to establish connection with a communication device and in which priorities of individual communication devices are provided;
a control step which, when the profiles are updated so that a profile of a higher priority than the profile of a currently connecting communication device is registered in the profiles held in the holding step, issues a command for a re-search for an access destination communication device if a connection with the currently connecting communication device has been established by connection by automatic search, or does not issue the command for the re-search if the connection with the currently connecting communication device has been established by manual connection; and
a communication step which, when the re-search for the access destination communication device is carried out, switches a current connection to a connection with an access destination communication device that is determined based on a result of the re-search.
